# EUROPEAN PATENT APPLICATION

(11) **EP 3 971 219 A1**
(43) Date of publication of application: **23.03.2022**
(21) Application number: 20196861.7
(22) Date of filing: 18.09.2020
(51) Int. Cl.: C08F 2/48, C09D 4/00, C08K 3/22

(54) **METHOD FOR PREPARATION OF METAL-POLYMER NANOCOMPOSITES**

(71) Applicant: Technische Universität Graz, 8010 Graz (AT)
(72) Inventor: Schmallegger, Max, 8010 Graz (AT); Gescheidt-Demner, Georg, 8010 Graz (AT)
(74) Representative: Patentanwaltskanzlei Matschnig & Forsthuber OG

(57) **Abstract**

The invention refers to a method for preparing a metal-polymer nanocomposite, the method comprising:
- Providing a starting mixture comprising:
- a dissolving reagent;
- at least one metal salt; and
- a monomer or monomer blend that can be polymerized via a radical polymerization;

- Adding into said starting mixture a photoinitiator;
- Intense stirring of said starting mixture until a flowable homogeneous mixture with dissolved metal salt and metal cations in the presence of said photoinitiator is obtained;
- Irradiating said homogeneous mixture with light under conditions to simultaneously decompose the photoinitiator into free radicals that can convert in the presence of said dissolving reagent into a reducing agent, which reducing agent reduces the metal cations to metal nanoparticles; and concurrently initiate a radical polymerization reaction of the monomer or monomer blend by free photoinitiator radicals;
- Obtaining a homogeneous metal-polymer nanocomposite material with stabilized metal nanoparticles embedded within a polymer matrix.

## Description

### FIELD OF THE INVENTION

The present invention relates to metal-polymer nanocomposites, to methods of preparing metal-polymer nanocomposites containing efficiently stabilized metal or metal-salt nanoparticles and to uses of such composites in particular as custom-made catalysts and as devices for analytical and technical uses.

### BACKGROUND AND DESCRIPTION OF PRIOR ART

Metallic nanoparticles may show improved size-related properties due to their advantageous size and geometry that differ significantly from those observed in the corresponding bulk materials. The embedding or incorporation of such metallic nanoparticles in polymer matrices to form metal-polymer nanocomposites may for example lead to nanocomposites with desirable electrical, optical, chemical, magnetic, dielectric and/or mechanical properties compared to polymer counterparts with reinforced microparticles. This is believed to be mostly due to high-surface-area to volume ratios of nanoparticle dispersions that are as homogeneously as possible distributed within the polymer matrix. For example, copper nanoparticles have found to be efficient for catalysing azide-alkyne cycloaddition click reactions [1, 2].

However, achieving a homogeneous and uniform dispersion or distribution, respectively, of nanoparticles or having nanoparticles of a particular geometry dispersed within the pre-polymer matrix can be challenging.

Metal or metal-salt nanoparticles are generally fabricated using wet-chemical methods under elevated temperatures. These common production routes are highly specific for certain applications and do not display versatility. For example, catalytically-active metal nanoparticles are commonly generated by the reduction of metal salts by chemical, electrochemical and thermal methods [4, 5, 6, 7, 8].

Disadvantageously, these methods may suffer from requiring expensive reagents, hazardous reaction conditions and long reaction times combined with difficult isolation procedures [7,9].

Moreover, harsh reaction conditions of currently common production routes do not allow the deposition of metal or metal-salt nanoparticles for example on polymeric surfaces or on other surfaces, which are sensitive to harsh chemical conditions or elevated temperatures of above 70°C.

Thus, also micropatterning of polymeric surfaces is impossible with the production methods currently available.

Furthermore, stabilization and immobilization of the nanoparticles within a pre-polymer matrix is a major issue with the presently used preparation methods. It is necessary to avoid aggregation of the nanoparticles within the polymer matrix and also to retain the desired oxidation state of the nanoparticles. This is hitherto accomplished by the use of protecting agents like ammonium salts, by performing the reduction under various inert conditions or by immobilizing the catalyst on a solid carrier.

In the following the term metal-ion nanoparticles and metal-salt nanoparticles is synonymous and shall express that in the case of metal salts the corresponding metal ions can participate as charge carriers in redox processes during radical polymerization.

Photo-induced reactions which use photoinitiators to start a radical polymerization reaction are a promising alternative route to manufacture such composite polymer materials. In general a photoinitiator is a molecule that creates reactive species like free radicals, cations or anions, when exposed to radiation in form of UV-light or visible light. Synthetic photoinitiators are key components in photopolymers like photo-curable coatings, adhesives and dental restoratives.

The state of the art in the field of photo-induced reactions involving metal salts and photoinitiators is described in two very recent publications:
*Beil et al.* [10] describe the synthesis and photo-activity of bismesitoylphosphinic acid and its copper complexes. It is shown that the complex Cu(II)-(BAPO-O)₂(H₂O)₂ which is a pre-fabricated Cu(II)-complex, is photoactive and serves as a source of metallic copper upon irradiation in water. Furthermore, the latter complex can also initiate radical polymerization of acrylates, allowing the synthesis of nanomaterials.

In more detail the process described by *Beil et. al.* comprises the synthesis of a Cu(II)-complex, in which in a first process step a polymer is formed by irradiating the solution for 2 minutes by ultraviolet (UV) light. Subsequently, in a second process step, the copper nanoparticles are generated. However, an irradiation period of additional 70 minutes by UV light was required for this second process step. In summary, this publication describes the two-step-formation of nanomaterials based on a pre-fabricated Cu(II)-complex formed with a very specific phosphine oxide. Disadvantageously, undesired cluster formation and aggregation of copper nanoparticles due to their charges cannot be excluded.

*Schmallegger et al.* [11] describe the formation of a novel radical upon photolysis of bis(acyl) phosphine oxide photoinitiators in the presence of water or alcohols. This new radical is rather persistent and does not participate in radical polymerization. However, it acts as a selective one-electron reducing agent.

Accordingly, it is highly desirable to having a preparation method at hand, which allows a versatile, mild and spatially selective method to produce metal-polymer nanocomposites containing efficiently stabilized metal or metal-salt nanoparticles.

### SUMMARY OF THE INVENTION

This invention comprises the light-induced production of nanocomposites consisting of a polymer matrix and metal or metal-ion nanoparticles in one single process step. The desired redox process generating the formation of metal or metal-ion nanoparticles *in situ* as well as simultaneously incorporating these nanoparticles into a polymeric matrix are triggered at the same time by irradiation with light. The novel preparation method thus activates and protects metal and metal-ion nanoparticles within a polymeric matrix simultaneously.

Particularly advantageous of this novel preparation method is that generation of nanoparticles at high efficiency under ambient conditions. In contrary to previously known processes, no elevated temperatures or specific reaction conditions such as working in an inert atmosphere are required.

### DETAILED DESCRIPTION OF THE INVENTION

According to the invention a method for preparing a metal-polymer nanocomposite can be specified, the method comprising the following steps:
-A- Providing a starting mixture comprising:
   -A1- a dissolving reagent that is suitable for dissolving a metal salt and selectively reacting with a photoinitiator;
   -A2- at least one metal salt; and
   -A3- a monomer or monomer blend that can be polymerized via a radical polymerization;
-B- Adding into said starting mixture a photoinitiator that can act as a light-triggered initiator for radical polymerization and as a precursor of a reducing agent;
-C- Intense stirring of said starting mixture until a flowable and/or sprayable homogeneous mixture with dissolved metal salt and metal cations in the presence of said photoinitiator is obtained;
-D- Irradiating said homogeneous mixture with light under conditions to simultaneously
   -D1- decompose the photoinitiator into free radicals that can convert in the presence of said dissolving reagent into a reducing agent, whereby the reducing agent reduces the metal cations to metal nanoparticles;
      and concurrently
   -D2- initiate a radical polymerization reaction of the monomer or monomer blend by free radicals of said photoinitiator;
-E- Obtaining a homogeneous metal-polymer nanocomposite material with stabilized metal nanoparticles embedded within a polymer matrix.

In order to facilitate the allocation to the aforementioned process steps (steps -A- to -E-) for example with regard to their beneficial effects and impacts, reference is also repeatedly made to the respective process step in the following. However, this should only serve to facilitate the readability and should in no way be a limitation of the advantageous embodiments of the method according to the invention, as they are presented in the following description as well as in the dependent claims.

Advantageously the inventive preparation method allows - compared to previously known, conventional processes - usage of a considerably wider range of metals or metal salts, respectively, to be generated and simultaneously embedded as metal nanoparticles within a polymer matrix of a metal-polymer nanocomposite material.

According to the inventive method, the photoinitiator simultaneously assumes the role of both the initiator of a radical polymerisation and - due to the presence of a dissolving reagent that can selectively react with the photoinitiator - also the role of a reducing agent for the metal salt. Both the monomer or monomer blend, respectively, and the metal salt can be varied widely. In addition, a photoinitiator can be used which allows the metal-polymer nanocomposite material to be bound directly to a surface, for example a glass surface.

Another major advantage of this preparation method according to the invention is that the metal nanoparticles are formed and protected within the newly formed polymer matrix in-situ even under particularly mild conditions in regard to pressure, temperature and pH-value.

In addition, particularly useful, this method allows the use of standard low molecular weight monomers - which show low viscosity values of their formulation - with the advantage of being able to selectively anchor to surfaces.

It was found that the monomer content, whereby also monomer blends can be used, can be basically adjusted based on the type of the monomer and the desired molecular weight distribution within the nanocomposite material to be achieved. Monomers generally do not absorb light in the same range as the photoinitiator does, accordingly there is basically no limit for the amount of the monomer or monomer blend provided within the starting mixture.

In a particularly advantageous embodiment of the invention the preparation method can be carried out in such a way that the dissolving reagent (according to step -A1-) in the starting mixture is an aqueous solution and/or an alcoholic solution, whereby a volume fraction of the dissolving reagent in the starting mixture is higher, preferably at least 5 times higher, particularly preferably at least 10 times higher, than a volume fraction of the photoinitiator added into said starting mixture.

The term "aqueous solution and/or alcoholic solution" means that either an aqueous solution, or an alcoholic solution, or a combination in form of a diluted aqueous alcoholic solution of any alcoholic strength can be used. Thus, the alcohol content of the dissolving reagent can be adjusted from 0 vol% of alcohol - which is in this case equal to an aqueous solution containing pure water - and up to nearly 100 vol% (percentage by volume) of alcohol - which is anhydrous or absolute alcohol, respectively.

According to this embodiment the water and/or alcohol content within the starting mixture has to be significantly higher than the amount of the photoinitiator. This is because water and/or alcohol does not only serve as the solvent allowing formulations of low viscosity but also acts as a reactant converting the primarily formed photoinitiator radicals into a redox-active agent or reducing agent, respectively, which reducing agent reduces the metal cations to the metallic states. This "kinetic trick" actually allows to direct the velocity for the growth rate of the metal nanoparticles thus allowing to adjust the particle size of said metal nanoparticles and to provide a rather uniform size distribution of the metal nanoparticles both within the homogeneous mixture as well as embedded within the polymer matrix. For an example the content of said aqueous solution and/or alcoholic solution within the starting mixture can be adjusted from 20 vol% to 95 vol%, preferably from 40 vol% to 90 vol%, whereby the viscosity of the mixture is significantly adjusted by selecting the respective concentration or content. In this way, the viscosity of the mixture can be adjusted so that, depending on the application, the homogeneous mixture is flowable and/or sprayable and can therefore be processed particularly flexibly and easily.

In a preferred embodiment of the invention the method steps -A- to -E- can be performed in the indicated order.

In another advantageous embodiment of the inventive method, a concentration of the metal salt (according to step -A2-) in the starting mixture can be selected from 0,5 mmol/L up to its limit of solubility within the starting mixture, preferably from 0,5 mmol/L to 50 mmol/L.

It was found that the metal-salt concentration determines the final concentration of the homogenously distributed metal nanoparticles within the polymer matrix. Thus, the chosen ratio between the concentration of the metal salt and the photoinitiator in the starting mixture can advantageously determine the desired properties of the polymer matrix produced. The metal-salt concentration of 0,5 mM - or in another spelling of 0,5 mmol/L (millimoles per litre) - up to its limit of solubility in the reaction system determines the final concentration of the homogeneously distributed metal nanoparticles. Thus, the ratio between the concentration of the metal-salt and that of the photoinitiator in the starting mixture is directly proportional to the desired proportion of metal nanoparticles being integrated or embedded within the polymer matrix. Depending on the desired field of application of the metal-polymer nanocomposite material produced by the inventive method, certain individual properties of the nanocomposite material like its conducting properties or its catalytic activity can be adapted in a very flexible way.

According to a further, particularly practical embodiment of the inventive method, the at least one metal salt (according to step -A2-) can be composed of metal cations and organic anions or inorganic anions, whereby preferably the metal cation is selected from the group consisting of Ag⁺ (silver cation), Au³⁺ (auric cation), Cu⁺ (cuprous cation), Cu²⁺ (cupric cation), Pd²⁺ (palladium cation), Ru²⁺ (ruthenium cation [2+]), Ru³⁺ (ruthenium cation [3+]), Pt²⁺ (platinum cation [2+]).

While the metal salt can be in principle any organic or inorganic metal salt, the organic anion can preferably be selected from the group consisting of an oxalate, phthalate, terephthalate, and carboxylate. For example any salts of carboxylic acids like salts with CF₃COO⁻ groups (trifluoroacetate anion) or RCOO⁻ (carboxylate anion) groups, or any other related organic anion can be used within the inventive method.

The inorganic anion can preferably be selected from the group consisting of NO₃⁻ (nitrate anion), SO₄²⁻ (sulphate anion), ClO₄⁻ (perchlorate anion), BrO₄⁻ (perbromide anion), IO₄⁻ (periodate anion), N₃⁻ (azido anion), SO₃²⁻ (sulphite anion), BF₃⁻ (boron trifluoride anion), PF₆⁻ (hexafluoro-phosphate anion), SbF₆⁻(hexafluoro-antimonate anion), SbCl₆⁻ (hexachlorido-antimonate anion), F⁻ (fluoride anion), or any other related inorganic anion except the following halogenides, for example in the form of the following anions: Cl⁻ (chloride anion), Br⁻ (bromide anion), I- (iodide anion). These latter anions react with the carbonyl group of bis(acyl) phosphine oxide photoinitiators. Therefore, the new persistent radical acting as a selective one-electron reducing agent cannot be formed in the presence of these anions.

In a further advantageous embodiment of the inventive method, the monomer or monomer blend provided (according to step -A3-) can have an average molecular weight of less or equal to 200 g/mol and can preferably be selected from the group consisting of acrylate monomer, methacrylate monomer, methyl methacrylate monomer (MMA), benzyl methacrylate monomer, triethylene glycol dimethylacrylate monomer (TEGDMA), vinylpyrrolidone monomer, styrene monomer, monofunctional vinyl derivative monomer, polyfunctional vinyl derivative monomer, and blends thereof.

These monomers can be used alone or in form of any blend with other monomers and/or any other blend of mono- and polyfunctional vinyl derivatives which can be polymerized by radical polymerization. Advantageously these monomers or monomer blends show comparable low average molecular weight compared to macromonomers. Another advantage of using monomers with comparatively low average molecular weight is their contribution to low viscosity of their formulation within the starting mixture after stirring and homogenising said mixture (according to step -C-). Due to the use of low molecular weight monomers also the flexibility during the polymerization reaction to embed metal particles in the polymer matrix is enhanced.

It can be particularly advantageous if, in the context of the invention, in a further embodiment of the method, the photoinitiator (according to step -B-) is selected from the group consisting of bis(acyl)-phosphine oxide, bis(2,6-dimethoxybenzoyl)-phosphine oxide, phenyl bis(2,4,6-trimethylbenzoyl)-phosphine oxide, and bis(2,6-dimethoxy benzoyl)(2,4,4-trimethylpentyl)-phosphine oxide.

The general chemical structure of bis(acyl)-phosphine oxides and bis(2,6-dimethoxybenzoyl)-phosphine oxides photoinitiators can be noted as follows wherein the residual R in both structures can be any organic residue:

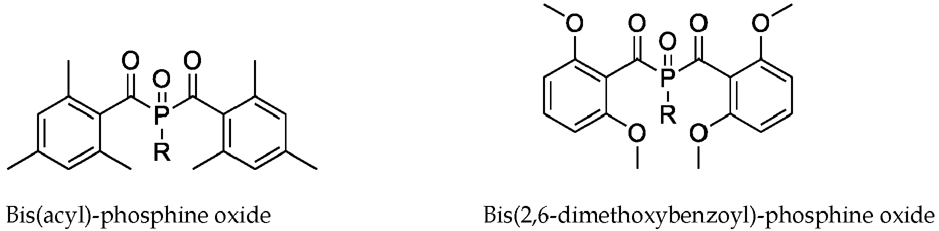

Usage of said bis(acyl)-phosphine oxides as photoinitiators in step -B- of the inventive method have the advantage that this group of photoinitiators have weak but decisive absorption bands in the range of wavelengths between approximately 400 nm and 450 nm (n-π* bands). This is a very important feature of said group of photoinitiators.

For example Irgacure^{®} 819, a di-tert-butylphosphine, is a representative of said group of phosphorus-based photoinititators, that is commercially available from Sigma-Aldrich.

The visible spectrum is the portion of the electromagnetic spectrum that is visible to the human eye. Electromagnetic radiation in the range of wavelengths from about 380 nm to 740 nm (nanometers) is called visible light or simply light. The range of wavelengths from 400 nm to 450 nm corresponds to frequencies from about 666 to 750 THz (Terra Hertz) and is called far spectral violet which is very dim and rarely seen.

These rather broad bands with wavelengths from approximately 400 nm to 450 nm do not interfere with the absorption bands of the monomers, the solvent or dissolving reagent, the metal salts, and the species formed during the photo-induced reaction. Accordingly the photo-induced reaction can be selectively and efficiently addressed for example by using lasers or LEDs which possess reasonable power at wavelengths above 400 nm. The rather low intensity of these bands is a particular advantage in this context: together with the comparatively high wavelengths of 400 nm and above from 400 nm to 450 nm, the low absorptivity provides a substantially expanded penetration depth within the in situ-formed polymer matrix.

Correspondingly, with the novel process in combination of said group of phosphorus-based photoinitiators it is possible to enlarge the penetration depth of the irradiation light within the in situ-produced polymer matrix up to several mm (millimeters). Advantageously, several mm-thick, for example up to 5 mm thick, nanocomposite materials can be manufactured as load-bearing, robust polymer structures without the need of the presence of any surface to enable a thin, layer-by-layer deposition.

It is of course also possible when using the method according to the invention to deposit the nanomaterial produced in situ on suitable surfaces. As another advantage of said preferred group of phosphorus-based photoinitiators, the photoinitiator can be bound or fixed to surfaces like surfaces made of glass. Thus, advantageously the metal-polymer nanocomposite material manufactured according to the inventive method can be deposited also on glass surfaces.

Usage of bis(acyl)-phosphine oxides and bis(2,6-dimethoxybenzoyl)-phosphine oxides with appropriate residues R allows to chemically anchor the photoinitiators onto surfaces such as glass, ceramics and similar materials. The anchored photoinitiator can be used for inducing a polymerization of radically polymerizable monomers from a surface. Because of the strong chemical bonding between the surface layer and the bulk material, an excellent chemical and physical durability of the surface is achieved.

In contrast to the invention, however, according to the inventors' knowledge it is not yet possible with conventional photochemical processes to produce comparatively thick structures of said metal-polymer nanocomposite materials that are several millimeters thick. Advantageously such thick structures of said metal-polymer nanocomposite materials can be for example inserted into reaction vessels and to be used as catalysts.

To give an example in contrast to the invention, alpha-hydroxy ketones are commonly used as photoinitiators in conventional photochemical processes. Representatives of said photoinitiators are for example the photoinitiator Irgacure^{®} 2959, a 2-hydroxy-4'-(2-hydroxyethoxy)-2-methylpropiophenone, or the photoinitiator Darocure^{®} 1173, a 2-Hydroxy-2-methylpropiophenone. Both cited photoinitiators are commercially available from Sigma-Aldrich. These photoinitiators show a completely different reduction mechanism in regard to metal salts as no reactive solvent as reducing agent is required and as their absorption bands have significantly shorter wavelengths compared to the aforesaid bis(acyl)-phosphine oxides. Thus, due to the only small penetration depth of the irradiation light in such a common application, deployment of these commonly-used photoinitiators is limited to the deposition of thin polymer layers on surfaces.

In yet another appropriate embodiment of the invention the method can be performed in a way that a content of the photoinitiator added (according to step -B-) is adjusted in case of a single-charged metal cation to a molar ratio of 1:1 between the metal salt and the photoinitiator in the starting mixture, or in case of a double-charged metal cation to a molar ratio of 1:2 between the metal salt and the photoinitiator in the starting mixture.

An essential factor for adjusting the photoinitiator content is the desired degree of the reduction based on the metal salt. It could be shown as part of this invention, that one photoinitiator molecule can transfer one electron. Accordingly, the molar ratio between the metal salt and the photoinitiator has to be a ratio approximately of 1:1 for the reaction of a singly charged cation like the Ag⁺ silver cation to its elemental state, Ag in form of silver metal.

In case of a double-charged metal cation like the Cu²⁺ cupric cation, the molar ratio between the metal salt and the photoinitiator has to be in the molar ratio approximately of 1:2. The skilled person will understand that in case of a triple-charged metal cation the molar ratio between the metal salt and the photoinitiator in the starting mixture will preferably be adjusted to a ratio approximately of 1:3, and so forth.

In another preferred embodiment the inventive method can be performed in a way that intense stirring of the starting mixture (according to step -C-) is carried out until the homogeneous mixture has a low viscosity less or equal to 150 mPas, preferably less or equal to 100 mPas, particularly preferably less or equal to 50 mPas.

Particularly advantageous in this embodiment is the fact that a flowable and/or sprayable homogeneous mixture having a low viscosity is an ideal starting point for step -D-, which is irradiating said homogeneous mixture with light to simultaneously reduce the metal cations to metal nanoparticles (according to step -D1-) and concurrently initiate the radical polymerization reaction to be able in situ integrate or embed, respectively, the metal nanoparticles that have just been produced (according to step -D2-). Depending on the respective application said homogeneous mixture is flowable and can be used or further processed for example as liquid film. Alternatively, or as a supplement to it, the homogeneous mixture can also be made so that it is sprayable or can be atomised.

Due to low viscosity of the homogeneous mixture, mobility of the in situ reduced metal nanoparticles within the mixture is enhanced, unwanted clustering of these metal nanoparticles is avoided and therefore an uniform distribution of metal nanoparticles within the newly-formed polymer matrix can be guaranteed.

Even another advantageous embodiment of the invention can be specified wherein irradiating of said homogeneous mixture (according to step -D-) is performed using light with a wavelength from 400 nm to 450 nm.

As said before, usage of (bisacyl)phosphaneoxides as photoinitiators show weak but decisive absorption bands in the range approximately between 400 nm and 450 nm (n-π* bands). This is a very important feature, as these rather broad bands do not interfere with the absorption bands of the monomers, the solvent, the metal salts, and the species formed during the photo-induced reaction. Accordingly the photo-induced reaction can be selectively and efficiently addressed by using lasers or LEDs (which possess reasonable power above 400 nm). The rather low intensity of these bands is a particular advantage in this context: In combination with the comparatively high wavelengths (above 400 nm) the low absorptivity provides a substantially expanded penetration depth of the irradiation light into the newly formed polymer matrix of up to several millimetres. Thus, thicker structures of nanocomposite materials can be manufactured in one piece, which has advantages compared to a layer-wise built-up in regard to time of manufacture, uniformity and homogeneity of the manufactured metal-polymer nanocomposite material as well as in regard to an increased flexibility to adjust certain material properties.

In an advantageous further embodiment of the inventive method that additionally comprises at least one pore-forming agent, said at least one pore-forming agent can be provided in the starting mixture (according to step -A-) and/or can be added together with a photoinitiator (according to step -B-) into said starting mixture.

Depending on the desired properties the porogen content of the metal-polymer nanocomposite material can be modified by adjusting the amount of adding at least one pore-forming agent into the starting mixture. The content of the at least one pore-forming agent in the starting mixture can be chosen from a small amount of several vol% up to a content of 60 vol%.

The use of porogens is particularly directed toward the use of the nanocomposites as catalysts. Adjusting the porogen content allows tailoring of the pore size based on the topology of the reactants and the products and can provide a more extended active surface of the catalyst.

It can be particularly effective when in another embodiment of the inventive method at least one pore-forming agent is applied which is selected from the group consisting of ethanol, 1-propanol, 1-butanol, 1-pentanol, 1-hexanol, 1-heptanol 1-octanol, tetrahydrofuran, acetonitrile, chloroform, hexane or ethyl acetate.

Adding one or a combination of several said pore-forming agents allows tailoring the pore size within the metal-polymer nanocomposite material, which pore size can range from an average pore diameter of 10 nm (nanometers) up to 9000 nm (nanometers) or 9 µm (micrometers), respectively.

The pore size can be adjusted by using appropriate porogens and solvents. These adjustments allow to modulate the surface area and to select molecules depending on their size. Consequently these parameters are decisive for the selectivity of the corresponding catalytic systems. Advantageously, the average pore size, ranging from 10 nm to 9000 nm, the distribution of pore size can be adjusted during the formation of the metal-polymer nanocomposites to fit each type of application. Small micropores and mesopores up to 50 nm provide the most substantial contributions to the overall surface area. The amount of micro-and mesopores formed can be used to control the catalytic activity of the nanocomposite. Large macropores in the range for example from 50 nm to 9000 nm usually only make up an insignificant contribution to the surface area. However, these pores are essential to allow liquids and gas to flow through the material. Therefore, controlled formation of large macropores results in metal-polymer nanocomposite which may be also used in microfluidic devices and chromatography, including application in separation of e.g. peptides and proteins or hydrocarbons.

Advantageously, also the pore size distribution can be adjusted by control of the reaction conditions. Metal-polymer nanocomposites with a narrow pore size distribution - for example ± 10 % of the average pore size - as well as composites with a broad pore size distribution spanning for example two order of magnitude, e.g. 10 - 1000 nm, can be fabricated selectively, depending on the intended application.

In addition to the pore size and size distribution, the amount of pores or porosity, respectively, can be controlled to be up to 90 vol% (volumes percentage) of the overall volume of the composite, preferably from 20 vol% to 75 vol%, by adjusting the composition and percentage of porogen in the mixture. Metal-polymer nanocomposites with a porosity ranging from 20 vol% to 75 vol% provide high surface areas and stability, whilst also enabling liquid and gas flow through the materials.

In another advantageous embodiment of the inventive method, the metal-polymer nanocomposite material can be obtained in one piece with a layer thickness from 0,5 mm to 10 mm, preferably with a layer thickness from 1 mm to 5 mm.

Controlling the layer thickness allows tailoring the active surface for different applications, such as heterogeneous catalysis. Advantageously, BAPO photoinitiators show rather broad absorption bands with low intensity from 400 to 450 nm. Irradiation of the photoinitiators at these wavelengths can provide a substantially expanded penetration depth within the in situ-formed polymer matrix. Accordingly, metal-polymer nanocomposite materials with a layer thickness of up to 10 mm can be fabricated in a single step in one piece with reduced production time, compared to materials of comparable thickness, which have to be produced layer-by-layer or layer-wise, respectively. Another advantage of the inventive method can be addressed as the built-up of a metal-polymer nanocomposite material that is manufactured as one-piece with a larger thickness of for example 5 mm or 10 mm shows a higher homogeneity than conventional layered composite materials.

Additionally, the metallic nanoparticles can be uniformly distributed within the polymeric film and show long-term thermodynamic stability (up to several months) in the absence of additional stabilizers and/or capping agents.

It may be particularly useful in another embodiment of the invention if the photoinitiator is chemically anchored to a surface, preferably a glass surface or a ceramic surface. A substituted BAPO photoinitiator, such as the siloxy-substituted bis(acyl- phosphane)oxide 4-(trimethoxysilyl)butyl-3-[bis(2,4,6- trimethylbenzoyl)phosphinoyl]-2-methyl-propionate can be anchored to a glass surface by immersing an object with a deposition surface into a solution or mixture containing the photoinitiator for up to 24 hour, preferably between 2 to 8 hours. This process is performed at room temperature or elevated temperature up to 80° C. Subsequently, the surface is irradiated in the presence of the mixture containing metal salt and polymer(blend).

In another embodiment of the inventive method, the photoinitiator (step -B-) can be added into said starting mixture in such a manner, in which an object with a deposition surface is immersed in the starting mixture. The photoinitiator is chemically anchored at least in sections to said deposition surface. Said object and/or said deposition surface is preferably a glass object or glass surface, respectively, or a ceramic object or ceramic surface.

Chemical anchoring is efficient in providing stable systems able to withstand extended use under practical conditions due to the formation of chemical bonds, whilst surfaces obtained by physical adsorption are often thermally unstable, withstand only low shear forces, and may be easily displaced by chemicals.

The inventive tasks mentioned before can also be solved with a metal-polymer nanocomposite material prepared by said inventive method, wherein stabilized metal nanoparticles are embedded within a polymer matrix.

In one embodiment of such a metal-polymer nanocomposite material manufactured according to the inventive method, the metallic nanoparticles can be uniformly distributed within the polymer matrix, without additional stabilizers and/or capping agents. Furthermore, the metal-polymer nanocomposites show long-term thermodynamic stability ranging from several days to several weeks, preventing the agglomeration of nanoparticles into larger structures, thereby retaining for example their catalytic active over long periods of time.

In another embodiment, the average pore size of the metal-polymer nanocomposites can be adjusted from 10 nm to up to 9000 nm, preferably from 10 nm - 50 nm for catalytic application and from 50 nm to 9000 nm for flow-through applications, i.e. protein separation or separation of hydrocarbons.

In yet another embodiment, the pore size distribution can be selectively adjusted ranging from a narrow distribution - for example ± 10 % of the average pore size - to very broad pore size distributions spanning two order of magnitude - for example with pore size distributions that can range from 10 nm to 1000 nm.

In another embodiment, the porosity of the metal-polymer nanocomposites can be controlled to be up to 90 vol% and preferably from 20 vol% to 75 vol%, by adjusting the composition and percentage of pore-forming solvent in the mixture. Metal-polymer nanocomposites with a porosity ranging from 20 vol% to 75 vol% provide high surface areas and stability, whilst also enabling liquid and gas flow through the materials In another embodiment, metal-polymer nanocomposites with a layer thickness up to 10 mm are formed in a single-step. This single-step approach reduces the production time compared to methods forming the material layer-by-layer.

To sum up, the present innovation offers at least the following advantages:
- Exploiting novel properties of photoinitiators in alcoholic and aqueous environments, which act as a redox-active molecule without losing their properties as polymerisation initiators.
- The possibility of metal reduction at low temperatures, for example at room temperature or lower as long as the reaction solution does not freeze.
- The fact that both polymerisation and controlled and stochiometric metal reduction can be carried out under microstructure-forming conditions.

### BRIEF DESCRIPTION OF THE DRAWINGS

In the following, in order to further demonstrate the present invention, illustrative and non-restrictive embodiments are discussed, as shown in the drawings, which show:
- **Figure 1**: in diagram form optical absorption spectra obtained before and upon photolysis of a test system according to an first example of the invention;
- **Figure 2a**: according to said first example an intensity distribution of copper nanoparticles formed upon irradiating of a solution of CuSO₄ in presence of Irgacure^{®} 819 as a first photoinitiator obtained by dynamic light scattering (DLS);
- **Figure 2b**: an intensity distribution of copper nanoparticles comparable to Fig. 2a in presence of BAPO-OH in the presence of poly(vinyl pyrrolidone) as another, second photoinitiator;
- **Figures 3a, 3b**: according to said first example scanning electron microscopy (SEM) images of nanoscopic copper obtained upon irradiation of a solution of CuSO₄ and Irgacure^{®} 819;
- **Figures 3c, 3d**: scanning electron microscopy (SEM) images of nanoscopic copper obtained upon irradiation of a solution of CuSO₄ and BAPO-OH in the presence of poly(vinyl pyrrolidone);
- **Figure 4**: a reaction scheme of another test system according to a second example of the invention, that refers to an exemplary copper-catalysed azide alkyne cycloaddition and also shows a ¹H-NMR spectrum of the triazole product in CHCl3-d1;
- **Figure 5**: a reaction scheme of a further test system according to a third example of the invention, wherein an exemplary copper-catalysed decarboxylation of 4-azidobenzoic acid to azidobenzene is indicated and an enlarged section of the aromatic region of the ¹H-NMR spectrum of the product in CD₃CN-d₃ is shown.

### DETAILED DESCRIPTION OF EMBODIMENTS OF THE INVENTION

### Example 1: Room temperature light-assisted fabrication of metallic nanoparticles in a polymer matrix

### I. General materials and Methods

The starting mixture was prepared by mixing triethylene glycol dimethacrylate (TEGDMA) or the specified monomer with methanol (40 vol% or as specified), followed by the addition of photoinitiator, phenylbis(2,4,6-trimethylbenzoyl)phosphine oxide (Irgacure^{®} 819) or the specified photoinitiator at a concentration of 5 mM or as specified (ImM to 50 mM), followed by addition of metal salt at a concentration of 5 mM or as specified (1 mM up to the limit of solubility). To reaction mixture, between 0 vol% and 60 vol% of either one of the following porogens is added: ethanol, 1-propanol, 1-butanol, 1-pentanol, 1-hexanol, 1-heptanol, 1-octanol, tetrahydrofuran, acetonitrile, chloroform, hexane or ethyl acetate.

The mixture was stirred for 5 minutes or as specified (1 minute to 30 minutes) using a stirring bar and a magnetic stirrer at 750 rounds per minute (rpm) or as specified (100 rpm to 1500 rpm) to obtain a flowable homogeneous mixture. The mixture was used as is or deoxygenized by bubbling with Nitrogen (N₂) or Argon (Ar) through the mixture for 10 minutes or as specified (5 minutes to 20 minutes).

The mixture was deposited in a Teflon^{®} mould (up to 5 millimetres deep) and light exposed. Alternatively, the mixture was filled into a quartz tube (up to 5 mm inner diameter) and light exposed. The exposure was performed with a high-intensity mercury-xenon lamp or light-emitting diodes (LED). The irradiation wavelength ranged from 300 nm up to 450 nm.

The light exposure dose was adjusted up to 4500 Milliwatts per square centimetre (mW/cm²). The light exposure time varied from 1 minute to 30 minutes.

### II. Results and Discussion

A method to obtain metal-polymer nanocomposites composed of independent nanoparticles with controlled particle size and distribution throughout the polymer network, fabricated at room temperature by light exposure was investigated. The method is capable of producing homogeneous and uniformly distributed metal nanoparticles embedded in a polymer matrix.

This method relies on UV or visible light irradiation (wavelength up to 450 nanometres) of a mixture of a monomer or monomer-blend and a metallic precursor (metal salt). The method uses simultaneous in-situ reduction-polymerization of a metal salt-monomer composition. Light irradiation of the homogeneous mixture comprising dissolved metal salt, photoinitiator, monomer or monomer blend decomposes the photoinitiator into free radicals. that can convert in the presence of a dissolving reagent (water or alcohol) into a reducing agent, whereby the reducing agent reduces the metal cations to metal nanoparticles (e.g. Cu²⁺ in CuSO₄ to Cu⁰).

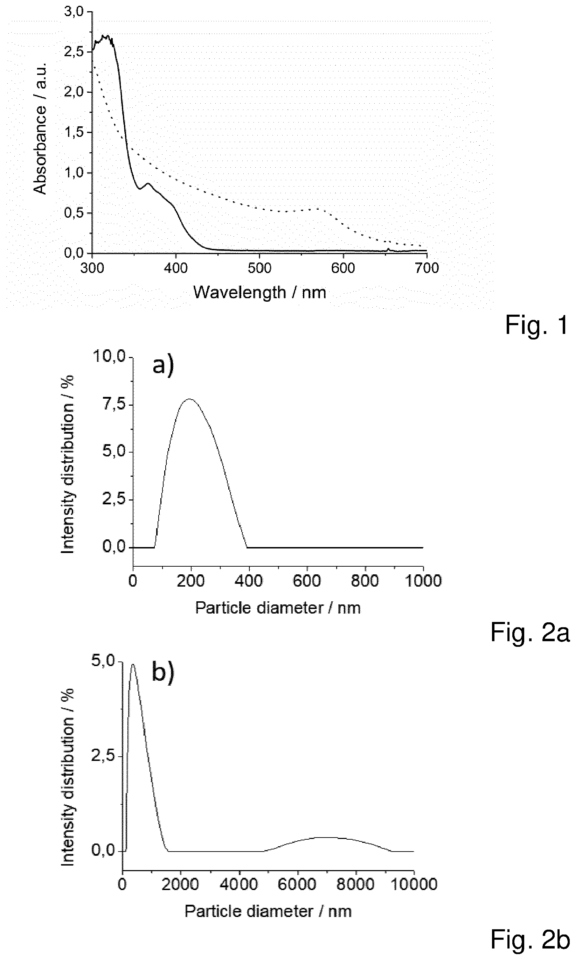

**Fig. 1** shows an optical absorption spectrum obtained upon photolysis. Irradiation time was adjusted at 10 minutes. As irradiation source a high pressure Hg-Xe lamp was used. In this example a mixture of the photoinitiator phenylbis(2,4,6-trimethylbenzoyl)phosphine oxide (Irgacure^{®} 819) and CuSO₄ in methanol in the presence of poly(vinyl pyrrolidone) was examined. The solid line as indicated in Fig. 1 represents the absorption spectrum before irradiation, the dotted line represents the absorption spectrum after 10 minutes of irradiation. The increase in the dotted absorption spectrum at 580 nm marks the formation of Cu nanoparticles and does not interfere with the parent formulation.

### a) Control of nanoparticle size:

The velocity for the growth rate of the metal nanoparticles can be controlled via the amount of water/alcohol in the mixture, the light intensity and the properties of the photoinitiator. This allows adjusting the particle size of said metal nanoparticles and to provide a rather uniform size distribution of the metal nanoparticles both within the homogeneous mixture as well as embedded within the polymer matrix.

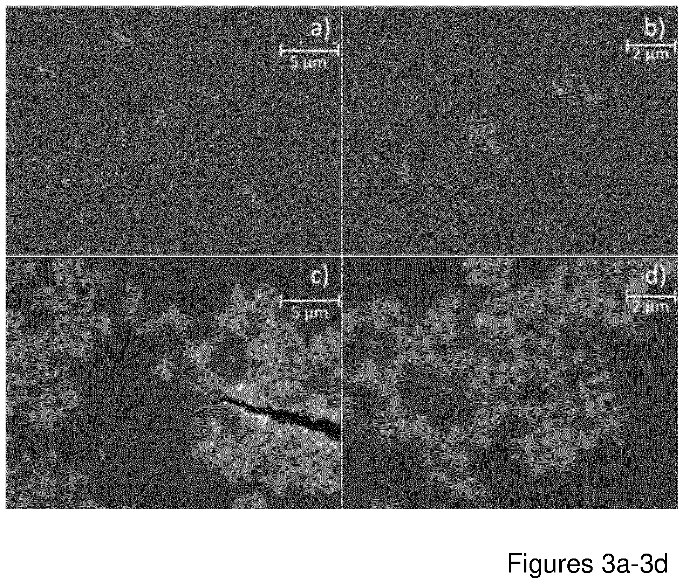

This is shown on the example of two bis(acyl)-phosphine oxides photoinitiators with different residual R, Irgacure^{®} 819 (R = phenyl) and BAPO-OH (R = OH). Employing Irgacure^{®}819 as the photo-reducing agent the formation of a high number of small Cu⁰ nanoparticles is achieved, whereas irradiation of BAPO-OH produces fewer nanoparticles, which then grow by continuous metal deposition during the reduction process. This is confirmed by dynamic light scattering (DLS) measurements - as can be seen in **Figures 2a and 2b** - and scanning electron microscopy (SEM) measurements - as can be seen in **Figures 3a to 3d****.**

**Figures 2a and 2b** each show in diagram form an intensity distribution of copper nanoparticles formed upon irradiating of a solution of CuSO₄ in presence of a photoinitiator obtained by dynamic light scattering (DLS).

In **Fig. 2a** the intensity distribution of Irgacure^{®} 819 as first tested photoinitiator is shown.

**Fig. 2b** shows the intensity distribution when BAPO-OH in presence of poly(vinyl pyrrolidone) is used as second tested photoinitiator.

**Figures 3a to 3d** each show scanning electron microscopy (SEM) images of nanoscopic copper obtained upon irradiation of a solution of CuSO₄ and Irgacure^{®} 819 (shown in Fig. 3a, Fig. 3b) and CuSO₄ and BAPO-OH in the presence of poly(vinyl pyrrolidone) (shown in Fig. 3c, Fig. 3d). Two scales are shown. The scale indicated in Fig. 3a (top left; photoinitiator: Irgacure^{®} 819) and in Fig. 3c (bottom left: photoinitiator: BAPO-OH in the presence of poly(vinyl pyrrolidone)) is 5 µm (micrometres) each. The scale indicated in Fig. 3b (top right; photoinitiator: Irgacure^{®} 819) and in Fig. 3d (bottom right: photoinitiator: BAPO-OH in the presence of poly(vinyl pyrrolidone)) is 2 µm (micrometres) each.

Controlling the amount of water/alcohol in the mixture, the light intensity and the properties of the photoinitiator in the reaction mixture allows adjusting the size distribution of metallic nanoparticles. An advantage of this method is its simplicity and / or a reduced production for the controlled fabrication of tailored metal-polymer nanocomposites.

### Example 2: Fabrication of heterogeneous catalysts for copper-catalysed azide-alkyne cycloaddition:

For the exemplary copper-catalysed azide-alkyne cycloaddition ethyl azidoacetate (46 µl), 1-hexyne (45 µl), triethylamine (1 µl) and a nanocomposite comprising Cu⁰ embedded into a poly(TEGDMA) matrix (100 mg; Cu⁰ content = 1 w%) were combined in a 1 ml vial and stirred at room temperature for 90 minutes using a stirring bar and a magnetic stirrer at 200 rpm. Subsequently, the reaction mixture was dissolved in deuterated chloroform (CHCl₃-d₁) and the nanocomposite was removed by filtration. The formation of the triazole product was confirmed employing ¹H nuclear magnetic resonance (¹H-NMR).

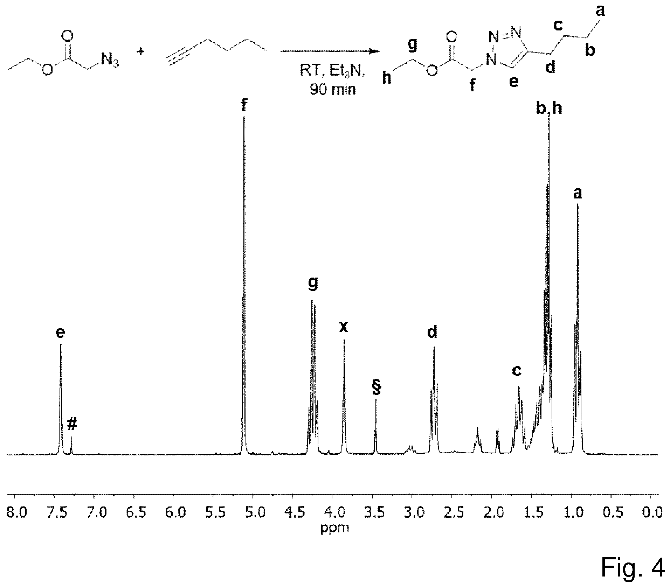

**Fig. 4** shows a reaction scheme of the exemplary copper-catalysed azide alkyne cycloaddition and ¹H-NMR spectrum of the triazole product in CHCl3-d1; (#) denotes residual CHCl3, (§) denotes residual methanol from the Cu⁰-poly(TEGDMA) nanocomposite, (X) denotes an additional impurity.

The use of a nanocomposite comprising embedded into a poly(TEGDMA) matrix allows efficient synthesis of triazole products. Additionally, no intricate work-up produces of the reaction mixture is required. Additional advantages of this method may include simplicity and/or reduced cost and/or production time.

### Example 3: Fabrication of heterogeneous catalysts for copper-catalysed decarboxylation of aromatic carboxylic acids:

For the exemplary copper-catalysed decarboxylation of aromatic carboxylic acids, 4-azidobenzoic acid (1.63 mg) was dissolved in 1 ml deuterated acetonitrile (CH₃CN-d₃) and the solution, triethylamine (1 µl) and a nanocomposite comprising Cu⁰ embedded into a poly(TEGDMA) matrix (100 mg; Cu⁰ content = 1 w%) were combined in a 1 ml vial and stirred at room temperature for 120 minutes using a stirring bar and a magnetic stirrer at 200 rpm. Subsequently, the nanocomposite was removed by filtration. The formation of the product was confirmed employing ¹H nuclear magnetic resonance (¹H-NMR).

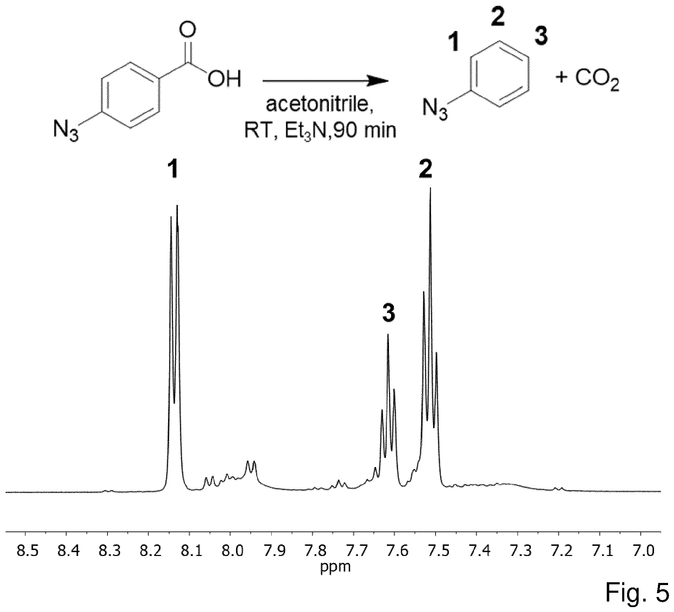

**Fig. 5** shows a reaction scheme of the exemplary copper-catalysed decarboxylation of 4-azidobenzoic acid to azidobenzene and zoom of the aromatic region of the ¹H-NMR spectrum of the product in CD₃CN-d₃.

The use of a nanocomposite comprising embedded into a poly(TEGDMA) matrix allows efficient decarboxylation of aromatic carboxylic acids. Additionally, no intricate work-up produces of the reaction mixture is required. Additional advantages of this method may include simplicity and/or reduced cost and/or production time.

### LIST OF CITED DOCUMENTS REFERRED TO IN THE DESCRIPTION

[1] Gawande, M. B., et al.: "Cu and Cu-Based Nanoparticles: Synthesis and Applications in Catalysis"; Chem. Rev. 2016, 116, 3722-3811.
[2] Alonso, F., et al.: "Copper Nanoparticles in Click Chemistry." Acc. Chem. Res. 2015, 48, 2516-2528.
[3] Dhas, N. A., et al.: "Characterization and Properties of Metallic Copper Nanoparticles"; Chem. Mater, 1998, 1446-1452.
[4] Lai, D., et al.: "Synthesis of Highly Stable Dispersions of Copper Nanoparticles Using Sodium Hypophosphite"; J. Appl. Polym. Sci., 2013, 128, 1443-1449.
[5] Sakar, D. K., et al.: "Mechanisms of Copper Nanocrystals on Thin Polypyrrole Films by Electrochemistry"; J. Phys. Chem. B., 2003, 107, 2879-2881.
[6] Cushing, B. L., et al.: "Recent Advances in the Liquid-Phase Syntheses of Inorganic Nanoparticles"; Chem. Rev., 2004, 104, 3893-3946.
[7] Dahl, J. A., et al.: "Toward Greener Nanosynthesis"; Chem. Rev., 2007, 107, 2228-2269.
[8] Rocoux, A., et al.: "Reduced Transition Metal Colloids: A Novel Family of Reusable Catalysts?"; Chem. Rev., 2002, 102, 3757-3778.
[9] Mittu, R., et al.: "Characterization of Copper Nanoparticles -A Review"; Int. Adv. Res. J. Sci. Eng. Technol., 2016, 3, 37-40.
[10] Beil, A., et al.: "Bismesitoylphosphinic Acid (BAPO-OH): A Ligand for Copper Complexes and Four-Electron Photoreductant for the Preparation of Copper Nanomaterials"; Angew. Chemie-Int. Ed., 2018, 26, 7697-7702.
[11] Schmallegger, M., et al.: "The Unprecedented Bifunctional Chemistry of Bis(acyl)phosphane Oxides in Aqueous and Alcoholic Media"; Chemistry - A Eur. J., 2019, 25, 8982-8986.

## Claims

1. A method for preparing a metal-polymer nanocomposite, the method comprising:
-A- Providing a starting mixture comprising:
-A1- a dissolving reagent that is suitable for dissolving a metal salt and selectively reacting with a photoinitiator;
-A2- at least one metal salt; and
-A3- a monomer or monomer blend that can be polymerized via a radical polymerization;
-B- Adding into said starting mixture a photoinitiator that can act as a light-triggered initiator for radical polymerization and as a precursor of a reducing agent;
-C- Intense stirring of said starting mixture until a flowable and/or sprayable homogeneous mixture with dissolved metal salt and metal cations in the presence of said photoinitiator is obtained;
-D- Irradiating said homogeneous mixture with light under conditions to simultaneously
-D1- decompose the photoinitiator into free radicals that can convert in the presence of said dissolving reagent into a reducing agent, whereby the reducing agent reduces the metal cations to metal nanoparticles;
and concurrently
-D2- initiate a radical polymerization reaction of the monomer or monomer blend by free radicals of said photoinitiator;
-E- Obtaining a homogeneous metal-polymer nanocomposite material with stabilized metal nanoparticles embedded within a polymer matrix.

2. The method according to claim 1, wherein the dissolving reagent (step -A1-) in the starting mixture is an aqueous solution and/or an alcoholic solution, whereby a volume fraction of the dissolving reagent in the starting mixture is higher, preferably at least five (5) times higher, particularly preferably at least ten (10) times higher, than a volume fraction of the photoinitiator added into said starting mixture.

3. The method according to claim 1 or 2, wherein a concentration of the metal salt (step -A2-) in the starting mixture is selected from 0,5 mmol/L up to its limit of solubility within the starting mixture, preferably from 0,5 mmol/L to 50 mmol/L.

4. The method according to any of claims 1 to 3, wherein the at least one metal salt (step - A2-) is composed of metal cations and organic anions or inorganic anions except Cl-, Br- and I-whereby preferably the metal cation is selected from the group consisting of Ag⁺, Au³⁺, Cu⁺, Cu²⁺, Pd²⁺,Ru²⁺, Ru³⁺, Pt²⁺.

5. The method according to any of claims 1 to 4, wherein the monomer or monomer blend provided (step -A3-) has an average molecular weight of less or equal to 200 g/mol and is preferably selected from the group consisting of acrylate monomer, methacrylate monomer, methyl methacrylate monomer, benzyl methacrylate monomer, triethylene glycol dimethyl acrylate monomer, vinylpyrrolidone monomer, styrene monomer, monofunctional vinyl derivative monomer, polyfunctional vinyl derivative monomer, and blends thereof.

6. The method according to any of claims 1 to 5, wherein the photoinitiator (step -B-) is selected from the group consisting of bis(acyl)-phosphine oxide, bis(2,6-dimethoxybenzoyl)-phosphine oxide, phenyl bis(2,4,6-trimethylbenzoyl)-phosphine oxide, and bis(2,6-dimethoxy benzoyl)(2,4,4-trimethylpentyl)-phosphine oxide.

7. The method according to any of claims 1 to 6, wherein a content of the photoinitiator added (step -B-) is adjusted in case of a single-charged metal cation to a molar ratio of 1:1 between the metal salt and the photoinitiator in the starting mixture, or in case of a double-charged metal cation to a molar ratio of 1:2 between the metal salt and the photoinitiator in the starting mixture.

8. The method according to any of claims 1 to 7, wherein intense stirring of the starting mixture (step -C-) is carried out until the homogeneous mixture has a low viscosity less or equal to 150 mPas, preferably less or equal to 100 mPas, particularly preferably less or equal to 50 mPas.

9. The method according to any of claims 1 to 8, wherein irradiating (step -D-) of said homogeneous mixture is performed using light with a wavelength from 400 nm to 450 nm.

10. The method according to any of claims 1 to 9, wherein at least one pore-forming agent is provided in the starting mixture (step -A-) and/or is added together with a photoinitiator (step -B-) into said starting mixture.

11. The method according to claim 10, wherein the at least one pore-forming agent is selected from the group consisting of ethanol, 1-propanol, 1-butanol, 1-pentanol, 1-hexanol, 1-heptanol, 1-octanol, tetrahydrofuran, acetonitrile, chloroform, hexane or ethyl acetate.

12. The method according to claim 10 or 11, wherein an average pore diameter of the metal-polymer nanocomposite is from 10 nm to 9000 nm.

13. The method according to any of claims 1 to 12, wherein the metal-polymer nanocomposite material is obtained in one piece with a layer thickness from 0,5 mm to 10 mm, preferably with a layer thickness from 1 mm to 5 mm.

14. The method according to any of claims 1 to 13, wherein the photoinitiator (step -B-) is added into said starting mixture in such a manner, in which an object with a deposition surface, to which deposition surface the photoinitiator is chemically anchored at least in sections, is immersed in the starting mixture, whereby said deposition surface is preferably a glass surface or a ceramic surface.

15. A metal-polymer nanocomposite material prepared by a method according to any of claims 1 to 14, wherein stabilized metal nanoparticles are embedded within a polymer matrix.
